# EUROPEAN PATENT SPECIFICATION

(11) **EP 2 404 538 B1**
(45) Date of publication and mention of the grant of the patent: **07.08.2019**
(21) Application number: 10006384.1
(22) Date of filing: 19.06.2010
(51) Int. Cl.: A47L 15/42, A47L 15/44, F16K 15/02

(54) **Detergent dispenser**
Waschmittelspender
Distributeur de détergent

(43) Date of publication of application: 11.01.2012
(73) Proprietor: Electrolux Home Products Corporation N.V., 1130 Brussels (BE)
(72) Inventor: Lundberg, Mats, 113 25 Stockholm (SE); Salerno, Luigi, 20092 Cinisello Balsamo (IT)
(74) Representative: Electrolux Group Patents

(56) References cited:
- EP-A1- 1 882 439
- EP-A2- 1 935 317
- DE-C- 51 968
- DE-C- 687 026
- DE-U1- 20 311 433
- GB-A- 1 338 781
- US-A1- 2008 099 713

## Description

The present invention relates to a dishwasher comprising a washing chamber and a detergent dispenser, the detergent dispenser comprising a detergent chamber for retaining a detergent.

Dishwashers known in the art usually have a detergent dispenser where a detergent tablet or powder is filled into the dispenser by means of a lid which is opened for filling the dispenser and then closed. Typically such a dispenser is provided on the inner side of the front door of the dishwasher which closes a washing chamber. After the door of the dishwasher is closed, a washing program can be started which in turn re-opens the lid of the detergent dispenser as soon as a program step is reached, where the detergent needs to be introduced into the washing chamber. Such a detergent dispenser has the advantage that the detergent is stored in the detergent chamber for example during a pre-rinse of the dishes and the detergent is added to the washing liquid during a main cleaning step. The disadvantage of such a dispenser is the fact that some space is required within the washing chamber for the swiveling of the lid during the opening of the detergent chamber. Since this swivelling of the lid needs to be done during a closed position of the door of the dishwasher some distance is required between the dispenser and the dishes or racks within the washing chamber. Although this might be not a problem in case of a larger dishwasher especially very compact dishwashers do not allow to have such a standard detergent dispenser. To overcome the problem of the limited space here detergent tablets are widely used which can be putted directly into the washing chamber, e.g. into a cutlery basket. Although this overcomes the problem of the limited space within very compact dishwashers, such a solution raises other severe problems. Even when using tablets some detergent is already at least partially washed out during a first pre-rinse. For hand for energy label declaration purposes the standard powder detergent must be used which is then even completely lost during pre-rinse having dramatic consequences on the washing performance.

EP1935317A2 discloses a water-bearing household appliance with a device for introducing cleaning agent, and with a valve for optional activation of a rinsing element for the device.

It is an object of the present invention to provide a dishwasher with a detergent dispenser that overcomes these problems.

In accordance with the present invention the above objects are solved by dishwashers having a detergent dispenser comprising a detergent chamber having an inlet which is connectable to a main pump of the dishwasher by means of a conduit or hose and by means of a first valve which is openable and closable for connecting and disconnecting the inlet to or from the main pump. The detergent chamber further comprises an outlet providing a permanent fluid communication between the detergent chamber and the washing chamber. The advantage of such an inventive dishwasher is the fact that no swivelling lid is required to release the detergent into the washing chamber. In contrast to known detergent dispensers water can be pumped by the main pump through the inlet or opening of the detergent chamber (which can be simply a hole in the chamber) in order to dissolve a detergent tablet or powder. By means of the first valve the water supply to the respective conduit or hose from the main pump into the detergent chamber can be controlled. Hence also the main pump might be constantly running or pumping during a running program in order to circulate the washing liquid within the washing chamber, the addition of the detergent can be controlled. It is hence possible to select and define specific points in time during a specific washing program where the detergent is dissolved an added. An outlet or second opening which again can be simply a hole within the wall of the detergent chamber is provided which provides a permanent fluid communication between the detergent chamber and the washing chamber. By means of this outlet which is open permanently it is assured that any dissolved detergent can exit the detergent chamber in order to be introduced into the washing chamber.

Preferred embodiments of the present invention are defined in the dependent claims.

In a first preferred embodiment the detergent chamber can be opened by means of a lid for filling the detergent into the detergent chamber. Such a lid makes it easier to load the detergent chamber, e.g. with larger detergent tablets. On the other hand, since the lid needs not to be opened during a washing program (due to the inlet and outlet provided in the detergent dispenser) the swivelling range of the lid is no more a limiting factor for very compact dishwashers.

In a further preferred embodiment, the first valve can be actuated electrically. Since in addition, the dishwasher can comprise a programmable control unit, the first valve can hence be opened and closed by means of at least one stored washing program. Such electrically activatable valve can e.g. comprise a solenoid for opening or closing.

The inventive dishwasher further comprises a second valve being located in the connection between the pump and the detergent chamber and having a valve inlet and a valve outlet where the valve inlet is in fluid communication with the first valve by means of a conduit or hose. The valve outlet of this second valve is in fluid communication with the detergent chamber and the second valve is construed in a way such that it opens when a pressure load above a predetermined minimum level is present at the valve inlet in order to provide a connection between the main pump and the detergent chamber and to close when the pressure load is below that level. Preferably, such a second valve can be integrated into the detergent dispenser, especially into the detergent chamber or the inlet of the detergent chamber. Such a second valve has the advantage that a reflux of dissolved detergent from the detergent chamber in a direction towards the first valve can be avoided. Since this second valve is only open in case a predefined minimum pressure is provided by means of the main pump and the open first valve it is in turn assured that in case the main pump is stopped and/or the water delivery by the main pump towards the detergent dispenser is interrupted through the first valve being in a closed position, the second valve switches into a closed position, so that the fluid communication between the detergent chamber and the first valve is interrupted. Hence, this second valve being positioned between the first valve and the detergent chamber, preferably being integrated into the detergent chamber, more preferably integrated into the inlet of the detergent chamber guarantees that the first valve is not blocked or otherwise affected
by detergent powder or dissolved detergent flowing backwards out of the detergent chamber.

In a preferred embodiment the second valve can be a telescopic valve comprising an outer duct being fixedly connected to the dishwasher relative to the detergent dispenser and having two openings at its facing ends. The first opening serves as valve inlet and the second opening in turn serves to receive a further, inner duct being slidably mounted within the outer duct such that the inner surface of the outer duct and the outer surface of the inner duct provide a sealing contact. This sealing contact assures that no liquid entering the first opening of the outer duct (which is the valve inlet of this telescopic valve) passes the telescopic valve in an unwanted manner. The inner duct has also an open end which is oriented towards the second opening of the outer duct in order to receive the liquid entering the inlet of the telescopic valve. The other end of the inner duct (being oriented away from the second opening of the outer duct) is closed. The inner duct comprises an opening, e.g. a bore or slit in the sidewall at a position such that the opening or bore is closed by the outer duct in a closed position of the telescopic valve. However, as soon as a certain pressure is provided at the inlet of the telescopic valve the pressure within both ducts lead to a translatory movement of the inner duct relative to the outer duct in the way from the outer duct since the opposite end of the inner duct is closed and the opening is covered by the outer duct. As a result due to the predetermined position of the opening of the inner duct, after a certain movement of the opening along the inner wall of the outer duct the opening is moved into a position where it is no longer covered by the outer duct so that the water or liquid within the telescopic valve can be ejected out of the opening. In conclusion by means of the applied pressure, the telescopic valve is brought from a closed position into an open position.

An elastic member can be provided in order to pre load the telescopic valve in a way such that the translation of the inner duct relative to the outer duct excesses the predetermined value at which the opening of the inner duct is released only in cases where the predetermined minimum pressure load is present at a valve inlet of the telescopic valve.

A preferred embodiment of a dishwasher according to the present invention is described below by reference to the drawings, in which:
Fig. 1 is a schematic view of a lower section of an inventive dishwasher;
Fig. 2 is a sectional view of a telescopic valve in an closed position; and
Fig. 3 is a sectional view of the telescopic valve of Fig. 2 in an open position.

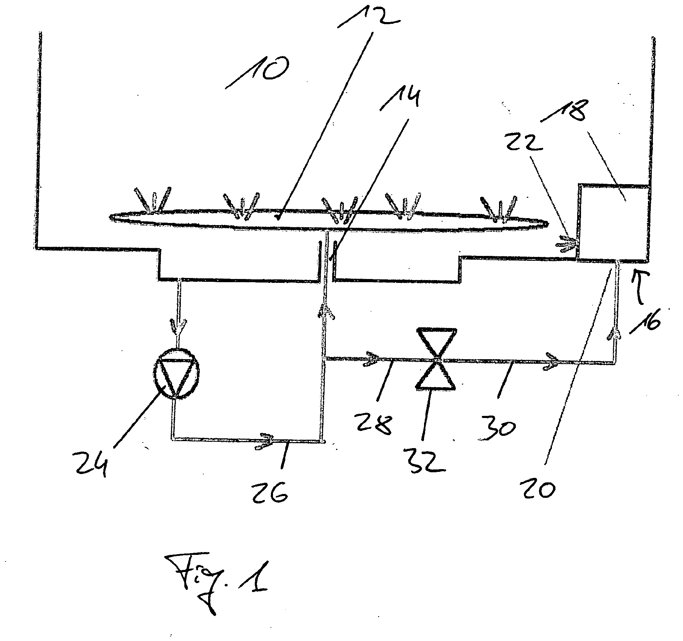

Fig. 1 shows a schematic sectional view of a lower section of a dishwasher according to the present invention. A spray arm 12 is rotatably mounted on a spray arm axis 14 within a washing chamber 10 of the dishwasher. Spray arm 12 is provided with water or washing liquid by means of a main pump 24 and a conduit 26. As soon as water or washing liquid is present in washing chamber 10 and main pump 24 is running, the water collected on the bottom of washing chamber 10 is directed by means of main pump 24 and conduit 26 through the axis 14 into spray arm 12 where it is sprayed through nozzles. The washing chamber 10 is further provided with a detergent dispenser 16 comprising a detergent chamber 18 into which a detergent powder or a detergent tablet can be filled through e.g. an opening (not shown) which can be closed by a lid. The detergent dispenser 16, more specifically the detergent chamber 18 has an inlet 20 and an outlet 22. A conduit or hose 28 branches from conduit or hose 26 and hence from the main hydraulic circle and directs water or washing liquid towards an inlet of a valve 32 where the outlet of the valve is connected via a further conduit or hose 30 with the inlet 20 of the detergent chamber. Valve 32 can be actuated electrically depending on the progress of a specific washing program which controls the dishwasher. Hence, by opening valve 32, water or washing liquid being pressurized by a main pump 24 can be branched off from conduit 26 and directed through conduit 30 towards inlet 20 of detergent chamber 18. This liquid is used to dissolve any detergent powder or detergent tablet within detergent chamber 18. Since outlet 22 of detergent chamber 18 is always open, a respective amount of dissolved detergent is ejected into washing chamber 10. Since valve 32 can be opened and closed by means of the washing program which also controls main pump 24, the dissolving of the detergent and the ejection of dissolved detergent through outlet 22 can easily be controlled.

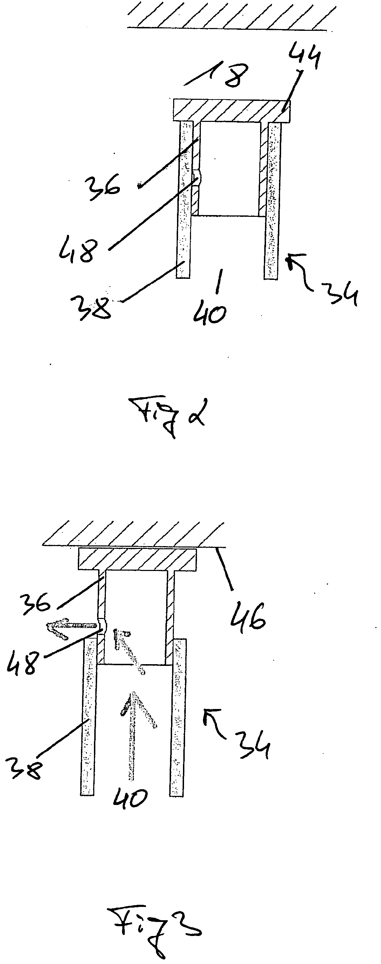

Figs. 2 and 3 show a telescopic valve which can be integrated between valve 32 and detergent chamber 18 for example near or within the inlet 20. Such a telescopic valve 34 (which is not shown in details in Fig. 1) is used to avoid a reflux of liquid with detergent from the detergent chamber 18 through conduit 30 back to valve 32 since such a reflux could block valve 32. Telescopic valve 40 is construed in a way such that it is switched into an open position as soon as a specific minimum pressure is present at valve inlet 40 where the pressure results from running main pump 24 and opened valve 32. On the other hand, in case this minimum pressure level is undershot at the inlet 40 of valve 34, valve 34 automatically switches into a closed position so that a reflux from detergent chamber 18 is avoided. Valve 34 comprises an inner duct 36 which is slidably mounted into an outer duct 38. Outer duct 38 is mounted fixedly with respect to the dishwasher, especially with respect to the detergent dispenser 16 and is a hollow conduit, with e.g. a circular or rectangular cross-section. The lower opening of the outer duct 38 serves as valve inlet 40 of the telescopic valve 34 through which liquid can enter the valve 34. Within outer duct 38 inner duct 36 is slidably mounted where the inner duct 36 has the same cross-sectional shape as the outer duct and has a dimension so that a sealing is provided between inner and outer duct 36 and 38. Since inner duct 36 is closed by a stop 44 any pressurized liquid entering inlet 40 tends to push inner duct 36 out of the outer duct 38. Inner duct 36 is provided with an opening 48 serving as an outlet of the valve which can be a bore or a slit so that as soon as inner duct 36 reaches a position where the opening 48 has left the outer duct 38 the liquid that has entered the valve 34 can exit the valve through this opening 48. A second stop 46 is provided at a fixed position relative to outer duct 38 at a distance from outer duct 38 so that after a certain movement of inner duct 36 out of outer duct 38, inner duct 36 is stopped such preventing inner duct 36 from leaving outer duct 38 completely. Such a construction of telescopic valve 34 assures that the liquid that is being provided under a certain pressure from main pump 24 can open valve 34 by shifting or switching it into the open position where the opening 48 of inner duct 36 is no more covered by outer duct 38. In order to provide a switch-off as soon as a predetermined pressure is undercut at valve inlet 40, inner duct 36 can be loaded by means of an elastic member which works against the pressure at inlet 40 in inside the ducts 36, 38. Hence as soon as main pump 24 is stopped or valve 32 is closed also telescopic valve 34 is automatically closed so that a reflux from detergent chamber 18 is avoided. Telescopic valve 34 can be integrated into detergent dispenser 16 or more specifically into detergent chamber 18 in a way that e.g. outer duct 38 is part of or is connected to the inlet 20 of detergent chamber 18. On the other hand stop 46 can be part of the inner wall of the detergent chamber 18 so that opening 48 representing the outlet of telescopic valve 34 opens directly into the detergent chamber 18.

### List of reference signs

- 10: washing chamber
- 12: spray arm
- 14: axis
- 16: detergent dispenser
- 18: detergent chamber
- 20: inlet
- 22: outlet
- 24: pump
- 26: conduit
- 28: conduit
- 30: conduit
- 32: valve
- 34: telescopic valve
- 36: inner duct
- 38: outer duct
- 40: valve inlet
- 44: stop
- 46: stop
- 48: opening

## Claims

1. Dish washer comprising a washing chamber (10) and a detergent dispenser (16), the detergent dispenser (16) comprising a detergent chamber (18) for retaining a detergent;
the detergent chamber (18) further comprises an inlet (20) being connectable to a main pump (24) of the dish washer by means of a conduit or hose (28, 30) and a first valve (32) which is openable and closable for connecting and disconnecting the inlet (20) to and from the main pump (24), and an outlet (22) providing a permanent fluid communication between the detergent chamber (18) and the washing chamber (10),
**characterized in that** the dish washer further comprises a second valve (34) between first valve (32) and the interior of the detergent chamber (18) having an valve inlet (40) and an valve outlet (48) where the valve inlet (40) is in fluid communication with the first valve (32) by means of a conduit or hose (30) and the valve outlet (48) is in fluid communication with the detergent chamber (18), the second valve (34) being construed to open when a pressure load above a predetermined minimum pressure load is present at the valve inlet (40) in order to provide the connection between the main pump (24) and the detergent chamber (18) and to close when the pressure load is below the predetermined minimum pressure load.

2. Dish washer according to claim 1, **characterized in that** the detergent chamber (18) can be opened by means of a lid for filling the detergent into the detergent chamber.

3. Dish washer according to anyone of the preceding claims, **characterized in that** the first valve (32) can be actuated electrically.

4. Dish washer according to claim 3, **characterized in that** the dish washer comprises a programmable control unit and the first valve (32) can be opened and closed by means of at least one stored washing program.

5. Dish washer according to claim 1, **characterized in that** the second valve (34) is integrated into the detergent chamber (18).

6. Dish washer according to claim 1, **characterized in that** the second valve is a telescopic valve (34).

7. Dish washer according to claim 6, **characterized in that** the telescopic valve (34) comprises an outer duct (38) being fixedly connected to the dish washer relative to the detergent dispenser (16) and having two openings at its facing ends where the first opening serves as valve inlet (40) and the second opening serves to receive an inner duct (36) being slidably mounted within the outer duct (38) such that the inner surface of the outer duct (38) and the outer surface of the inner duct (36) provide a sealing contact, where the inner duct (36) has an open end which is oriented towards the second opening of the outer duct and a closed end which is oriented away from the second opening of the outer duct and the inner duct (36) further comprises an opening (48) in a sidewall at a position such that the opening is closed by the outer duct (38) until a translation between the inner (36) and the outer duct (38) away from each other excesses a predetermined value at which an open state of the telescopic valve (34) is reached where the main pump (24) and the detergent chamber (18) are in fluid communication.

8. Dish washer according to claim 7, **characterized in that** the telescopic valve (34) is loaded by an elastic member in a way such that the translation between the inner (36) and the outer duct (38) excesses the predetermined value only in cases where the predetermined pressure load is present at the valve inlet (40) of the telescopic valve (34).

## Patentansprüche

1. Geschirrspülmaschine, umfassend eine Spülkammer (10) und einen Spülmittelspender (16), wobei der Spülmittelspender (16) eine Spülmittelkammer (18) zum Aufbewahren eines Spülmittels umfasst,
wobei die Spülmittelkammer (18) ferner einen Einlass (20), der mittels einer Leitung oder eines Schlauchs (28, 30) mit einer Hauptpumpe (24) der Geschirrspülmaschine und einem ersten Ventil (32) verbindbar ist, das zum Verbinden des Einlasses (20) mit der Hauptpumpe (24) und zum Trennen des Einlasses (20) von der Hauptpumpe (24) geöffnet und geschlossen werden kann, und einen Auslass (22) umfasst, der eine dauerhafte fluidische Verbindung zwischen der Spülmittelkammer (18) und der Spülkammer (10) bereitstellt,
**dadurch gekennzeichnet, dass** die Geschirrspülmaschine ferner ein zweites Ventil (34) zwischen dem ersten Ventil (32) und dem Innenbereich der Spülmittelkammer (18) umfasst, das einen Ventileinlass (40) und einen Ventilauslass (48) aufweist, wobei sich der Ventileinlass (40) mittels einer Leitung oder eines Schlauchs (30) in fluidischer Verbindung mit dem ersten Ventil (32) befindet und sich der Ventilauslass (48) mit der Spülmittelkammer (18) in fluidischer Verbindung befindet, wobei das zweite Ventil (34) dazu ausgelegt ist, sich zu öffnen, wenn an dem Ventileinlass (40) eine Druckbelastung über einer vorgegebenen Mindestdruckbelastung vorliegt, um die Verbindung zwischen der Hauptpumpe (24) und der Spülmittelkammer (18) bereitzustellen, und sich zu schließen, wenn die Druckbelastung unter der vorgegebenen Mindestdruckbelastung liegt.

2. Geschirrspülmaschine nach Anspruch 1, **dadurch gekennzeichnet, dass** die Spülmittelkammer (18) mittels eines Deckels geöffnet werden kann, um das Spülmittel in die Spülmittelkammer zu füllen.

3. Geschirrspülmaschine nach einem der vorhergehenden Ansprüche, **dadurch gekennzeichnet, dass** das erste Ventil (32) elektrisch betätigt werden kann.

4. Geschirrspülmaschine nach Anspruch 3, **dadurch gekennzeichnet, dass** die Geschirrspülmaschine eine programmierbare Steuereinheit umfasst und das erste Ventil (32) mittels wenigstens eines gespeicherten Spülprogramms geöffnet und geschlossen werden kann.

5. Geschirrspülmaschine nach Anspruch 1, **dadurch gekennzeichnet, dass** das zweite Ventil (34) in die Spülmittelkammer (18) integriert ist.

6. Geschirrspülmaschine nach Anspruch 1, **dadurch gekennzeichnet, dass** das zweite Ventil ein Teleskopventil (34) ist.

7. Geschirrspülmaschine nach Anspruch 6, **dadurch gekennzeichnet, dass** das Teleskopventil (34) ein äußeres Rohr (38) umfasst, das relativ zu dem Spülmittelspender (16) fest mit der Geschirrspülmaschine verbunden ist und zwei Öffnungen auf den sich gegenüberliegenden Enden aufweist, wobei die erste Öffnung als Ventileinlass (40) dient und die zweite Öffnung dazu dient, ein inneres Rohr (36) aufzunehmen, das auf eine solche Weise verschiebbar in dem äußeren Rohr (38) befestigt ist, dass die Innenfläche des äußeren Rohrs (38) und die Außenfläche des inneren Rohrs (36) einen dichtenden Kontakt bereitstellen, wobei das innere Rohr (36) ein offenes Ende, das in Richtung zu der zweiten Öffnung des äußeren Rohrs ausgerichtet ist, und ein geschlossenes Ende aufweist, das von der zweiten Öffnung des äußeren Rohrs weg ausgerichtet ist, und das innere Rohr (36) ferner eine Öffnung (48) in einer Seitenwand an einer Stelle auf eine solche Weise umfasst, dass die Öffnung durch das äußere Rohr (38) geschlossen ist, bis eine translatorische Bewegung zwischen dem inneren (36) und dem äußeren Rohr (38) voneinander weg einen vorgegebenen Wert überschreitet, bei dem ein geöffneter Zustand des Teleskopventils (34) erreicht wird, in dem sich die Hauptpumpe (24) und die Spülmittelkammer (18) in fluidischer Verbindung befinden.

8. Geschirrspülmaschine nach Anspruch 7, **dadurch gekennzeichnet, dass** das Teleskopventil (34) auf eine solche Weise durch ein elastisches Element belastet ist, dass die translatorische Bewegung zwischen dem inneren (36) und dem äußeren Rohr (38) den vorgegebenen Wert nur in Fällen überschreitet, in denen die vorgegebene Druckbelastung an dem Ventileinlass (40) des Teleskopventils (34) vorliegt.

## Revendications

1. Lave-vaisselle comprenant une chambre de lavage (10) et un distributeur de détergent (16), le distributeur de détergent (16) comprenant une chambre de détergent (18) pour contenir un détergent ;
la chambre de détergent (18) comprenant en outre une entrée (20) pouvant être raccordée à une pompe principale (24) du lave-vaisselle au moyen d'un conduit ou d'un tuyau (28, 30) et une première soupape (32) qui peut être ouverte et fermée pour connecter et déconnecter l'entrée (20) à la pompe principale (24), et une sortie (22) assurant une communication fluidique permanente entre la chambre de détergent (18) et la chambre de lavage (10),
**caractérisé en ce que** le lave-vaisselle comprend en outre une seconde soupape (34) entre la première soupape (32) et l'intérieur de la chambre de détergent (18) ayant une entrée de soupape (40) et une sortie de soupape (48), l'entrée de soupape (40) étant en communication fluidique avec la première soupape (32) au moyen d'un conduit ou d'un tuyau (30) et la sortie de soupape (48) étant en communication fluidique avec la chambre de détergent (18), la seconde soupape (34) étant conçue pour s'ouvrir lorsqu'une charge de pression supérieure à une charge de pression minimale prédéfinie est présente au niveau de l'entrée de soupape (40) afin d'assurer la liaison entre la pompe principale (24) et la chambre de détergent (18) et se fermer lorsque la charge de pression est inférieure à la charge minimale prédéfinie.

2. Lave-vaisselle selon la revendication 1, **caractérisé en ce que** la chambre de lavage (18) peut être ouverte au moyen d'un couvercle pour remplir la chambre de lavage avec le détergent.

3. Lave-vaisselle selon l'une quelconque des revendications précédentes, **caractérisé en ce que** la première soupape (32) peut être actionnée électriquement.

4. Lave-vaisselle selon la revendication 3, **caractérisé en ce que** le lave-vaisselle comprend une unité de commande programmable et la première soupape (32) peut être ouverte et fermée au moyen d'au moins un programme de lavage enregistré.

5. Lave-vaisselle selon la revendication 1, **caractérisé en ce que** la seconde soupape (34) est intégrée dans la chambre de détergent (18).

6. Lave-vaisselle selon la revendication 1, **caractérisé en ce que** la seconde soupape est une soupape télescopique (34).

7. Lave-vaisselle selon la revendication 6, **caractérisé en ce que** la soupape télescopique (34) comprend un conduit extérieur (38) relié de manière fixe au lave-vaisselle par rapport au distributeur de détergent (16) et ayant deux ouvertures à ses extrémités opposées, la première ouverture servant d'entrée de soupape (40) et la seconde ouverture servant à recevoir un conduit intérieur (36) monté de manière coulissante dans le conduit extérieur (38) de sorte que la surface interne du conduit extérieur (38) et la surface externe du conduit intérieur (36) assurent un contact étanche, le conduit intérieur (36) ayant une extrémité ouverte qui est orientée vers la seconde ouverture du conduit extérieur et une extrémité fermée qui est orientée à l'opposé de la seconde ouverture du conduit extérieur et le conduit intérieur (36) comprenant en outre une ouverture (48) dans une paroi latérale à une position telle que l'ouverture est fermée par le conduit extérieur (38) jusqu'à ce qu'une translation entre le conduit intérieur (36) et le conduit extérieur (38) s'éloignant l'un de l'autre dépasse une valeur prédéfinie à laquelle un état ouvert de la soupape télescopique (34) est atteint lorsque la pompe principale (24) et la chambre de détergent (18) sont en communication fluidique.

8. Lave-vaisselle selon la revendication 7, **caractérisé en ce que** la soupape télescopique (34) est chargée par un élément élastique de sorte que la translation entre le conduit intérieur (36) et le conduit extérieur (38) dépasse la valeur prédéfinie uniquement lorsque la charge de pression prédéfinie est présente au niveau de l'entrée de soupape (40) de la soupape télescopique (34).
